# EUROPEAN PATENT SPECIFICATION

(11) **EP 1 693 829 B1**
(45) Date of publication and mention of the grant of the patent: **05.12.2018**
(21) Application number: 05003671.4
(22) Date of filing: 21.02.2005
(51) Int. Cl.: G10L 15/26

(54) **Voice-controlled data system**
Sprachgesteuertes Datensystem
Système de données à commande vocale

(43) Date of publication of application: 23.08.2006
(73) Proprietor: Harman Becker Automotive Systems GmbH, 76307 Karlsbad (DE)
(72) Inventor: Hennecke, Marcus, 89075 Ulm (DE); Nüßle, Gerhard, 89134 Blaustein (DE)
(74) Representative: Bertsch, Florian Oliver

(56) References cited:
- GB-A- 2 304 957
- US-A- 5 774 859
- US-B1- 6 513 010
- "DATA RETRIEVAL THROUGH A COMPACT DISK DEVICE HAVING A SPEECH-DRIVEN INTERFACE" IBM TECHNICAL DISCLOSURE BULLETIN, IBM CORP. NEW YORK, US, vol. 38, no. 1, January 1995 (1995-01), pages 267-268, XP000498766 ISSN: 0018-8689
- DREWS C ET AL: "Virtual jukebox reviving a classic" SYSTEM SCIENCES, 2001. HICSS. PROCEEDINGS OF THE 35TH ANNUAL HAWAII INTERNATIONAL CONFERENCE ON 7-10 JANUARY 2001, PISCATAWAY, NJ, USA,IEEE, 7 January 2001 (2001-01-07), pages 1438-1444, XP010587414 ISBN: 0-7695-1435-9
- JEAN KUMAGAI: "Talk to the machine" IEEE SPECTRUM, September 2002 (2002-09), pages 60-64, XP002337268
- M NILSSON: "Informal standard of ID3v2" ID3V2_4_0-STRUCTURE, [Online] 1 November 2000 (2000-11-01), pages 1-11, XP002338145 Retrieved from the Internet: URL:http://www.id3.org/id3v2.4.0-structure .txt> [retrieved on 2005-07-25]

## Description

This invention relates to a voice-controlled data system, to a data carrier comprising media files, a multimedia system, a method for a voice-controlled selection of a media file, and to a method for generating or complementing media files.

### Related Art

For many applications, e.g. multimedia systems comprising an audio/video player, it is necessary to select an audio or video file from a large list of files, e.g. music titles. Furthermore, the use of media files available over a centralized data base usable for a variety of users has become very well known. The download of audio or video files from a communication network, e.g. the internet, has become a widespread phenomenon due to the fact that systems have been developed which allow the storing of audio and video data files in a compact way by using different compression techniques. For the user it has become possible to configure a selection of different audio or video files which may be stored on one storage medium.

It is often the case that identification data allowing the identification of the media files have names in different languages. If an entry is to be selected by speech recognition, the problem arises that neither the language of the intended entry nor the language in which the name of the intended entry is pronounced is known. Additionally, the voice-controlled operation of multimedia systems is well known in the art. Especially in vehicles, the voice-controlled operation of electronic systems comprising an audio module, a navigation module, a telecommunication module, and/or a radio module is a useful feature for the driver which helps him to focus on the traffice. To this end, speech recognition units are used in which a voice command from the user of the electronic system is detected and phonetic transcriptions of the detected voice command are used for executing the command of the user. The fact that the entries of the media files to be selected have names in different languages and that the language of the intended entry is not known complicates the speech recognition process. The phonetic transcriptions can either be generated automatically or they can be searched in large look-up tables containing examples of phonetic transcriptions. With the use of automatically generated phonetic transcriptions the recognition rate of the control command is low, and the use of look-up tables containing phonetic transcriptions is hardly possible when the control command comprises proper names of different languages.

The control of an electronic system comprising media files in order to select one of the files is a difficult task, since the speech recognition system has to recognize the speech input from the user, which may comprise variable vocabulary, e.g. the name or the title of the media file.

In the art, many different formats for storing media data have been developed, e.g., the MP3 format, the AAC format, the WMA format, the MOV format, and the WMV format, etc. In many of these formats meta-data are provided containing information about the file itself or any other information relating to this file. The document "Data retrieval through a compact disk device having a speech-driven interface" from the IBM Technical Disclosure Bulletin, published in January 1995 discloses storing prompts and associated phonetic patterns on a CD.

### Summary of the invention

As a consequence, there is a need to provide a possibility of improving a voice-controlled selection of a media file from a group of several media files.

Furthermore, there is a need to improve the speech recognition, in particular when one specific media file is to be selected from a group of media files.

This need is met by the independent claims. The dependent claims refer to preferred embodiments of the invention.

The voice-controlled data system comprises a storage medium for storing media files, the media files having associated file identification data for allowing the identification of the media files. These file identification data can be part of the meta-data where further information of the media file can be stored. The file identification data preferably comprise phonetic data including phonetic information corresponding to the file identification data or relating to the file identification date. The phonetic data which are additionally contained in the file identification data help to improve the voice-controlled operation of the data system, since the phonetic information can be used in a speech recognition unit which compares the phonetic data to a speech command input into the speech recognition unit. When a user wants to select a media file comprised in the data system, neither the language of the intended entry nor the language in which the name of the intended entry is pronounced is known. According to the invention the phonetic information comprised in the file identification data help to improve the recognition of the voice command from the user of the system, when the user tells the system which one of the media files is to be selected. Additionally, a file selecting unit may be provided which selects one of the media files based on the comparison result. According to an important aspect of the invention, the phonetic information improves the selection of a file out of a plurality of files, since the phonetic information comprised in the files helps to correctly identify the speech control command of the user.

Preferably, the file identification data comprise information allowing the identification of the file, be it the title of the file, the artist of the file, the author of the file, or a composer of the file, and/or the genre of the file. Preferably, the phonetic information comprises the phonetic transcription of at least part of the file identification data. When the user wants to select one of the media files, the user will probably use at least part of the information comprised in the file identification data, be it the title of the file, or the composer or artist of the file. When the file identification data comprise a phonetic transcription of at least the title, the artist, the author, or the composer, the speech recognition can be improved considerably. The speech recognition unit which compares the speech command from the user of the system to the phonetic transcription comprised in the file identification data can more easily determine the correct meaning of the speech command of the user, since different transcriptions of the terms used to identify the files are associated to the files. The speech recognition unit determines the most likely meaning of the speech command by matching the phonetic transcriptions to the acoustic input of the user, and determines the best matching result.

Often, the language of the speech command input into the speech recognition unit for selecting one of the media files is not known. This complicates the speech recognition process, in particular when the user pronounces a foreign language name for one file in his own (different) mother language. For taking this into account, the phonetic data comprised in the file identification data may comprise different phonetic transcriptions of one term of the file identification data. The different phonetic transcriptions can consider the possible different pronunciations of the file identification data. The different phonetic transcriptions can, e.g., consider the pronunciation of one term of the file identification data in different mother languages. Let's assume for illustration purposes that a German user wants to select a media file having an English name. Additionally a French user wants to select a file having the same English name. The speech recognition unit should be able to recognize this English name even though the user pronounces the file name influenced by the German or French mother language. The different phonetic transcriptions can take into consideration that specific names may be pronounced differently, when users having different mother languages pronounce the same name. As a consequence, a phonetic transcription of one term of the file identification data could be generated by taking into consideration the mother language of the user. Based on the different phonetic transcriptions of one term of the file identification data, the speech recognition unit can more easily identify the correct voice command when the different phonetic transcriptions are matched to the acoustic input of the user.

Preferably, the phonetic data comprise the phonetic notations of the title of the media file and/or of the artist or composer of the media file. The user may wish to play one of the media files and will therefore use a voice command telling the system the title of the media file and/or the composer of the media file. For a voice-controlled operation the user probably additionally uses static vocabulary, e.g. "play", "forward", "backwards", "stop", etc. When the phonetic transcription of the title and/or of the artist is comprised in the file identification data, the speech recognition can be improved, as the voice command containing the title or the artist can be recognized with a high probability.

According to a preferred embodiment of the invention the media files comprise audio or video files. As already mentioned above, the use of audio/video files downloaded from the Internet has become a widespread phenomenon. More and more often audio or video files are bought in electronic shops, e.g. Tunes from Apple, etc. For a fast transmission of the media file to the user, the media files are transmitted to a storage medium of the voice-controlled data system in a compressed way. The compressed storing of the media file makes it easy to transfer the file from one medium to the other by using a wired connection or a wireless connection.

When different phonetic transcriptions of one term are stored in the file identification data, the different phonetic transcriptions can be generated by applying pronunciation rules of different languages for said term. Often, one term or one word is differently pronounced depending on the language spoken by the respective person. E.g., words are pronounced one way when a person with a French mother language uses the term, and are pronounced in another way when a German, Italian or English speaking person uses the same term. Therefore, different phonetic transcriptions of the file identification data can be generated by using phonetic rules of different languages and can be stored in the file identification data. Let's assume for illustration purposes that the title of the media file which the user wants to select comprises the name of the city Paris. The transcription of this word is different when French phonetic rules are applied, since, when the word "Paris" is pronounced by a French speaking person, the "s" at the end is not pronounced, whereas, when the word Paris is used by an English speaking person, the "s" at the end is pronounced, what results in a completely different phonetic transcription. In order to improve the speech recognition, even when people having different mother languages want to select a media file using a voice command, different phonetic transcriptions considering phonetic rules of different languages can be incorporated into the file identification data. Additionally, when the mother language of the user of the system is known, the phonetic rules of this mother language can be used for the generation of the phonetic transcriptions. Furthermore, it is possible that the user does not know the correct pronunciation of a proper name (e.g. the singer Sade). For further improving the speech recognition process "incorrect" pronunciations of names can also be considered by incorporating phonetic transcriptions taking into account these "incorrect" pronunciations. Furthermore, the phonetic transcriptions could contain a language identification part for identifying the language of the phonetic transcription.

The invention further relates to a data carrier comprising media files, the media files having associated file identification data and phonetic data as described above.

The invention further relates to a multimedia system comprising a database system as mentioned above, the multimedia system further comprises a media player for playing the selected media files. According to a preferred embodiment, the multimedia system is incorporated into a vehicle. In vehicles, the speech controlled operation of a multimedia system is an important feature for the driver. By using speech-controlled multimedia systems the driver can focus on the traffic and can use speech commands for operating the system.

The invention further relates to a method for a voice-controlled selection of a media file stored on a data storage unit comprising a plurality of media files, the media files having associated file identification data, the file identification data comprising phonetic data as mentioned above. When the user wants to select a media file, a voice command telling the system which media file should be selected will be used. The speech recognition unit has to determine the best matching phonetic transcription by comparing the input voice data, i.e. the voice command, to data extracted from the media file. To this end, phonetic data are extracted from the file identification data and supplied to the speech recognition unit as recognition vocabulary. The speech recognition unit can then compare the input voice data to the extracted phonetic data and can then generate a corresponding speech control command. A media file is then selected from the plurality of media files comprised in a data storage unit in accordance with the generated speech control command. It is also possible that not only one media file is selected, but several media files. When the speed control command "play [name of artist]" is used, the system can also select all the media files of said artist. It is possible that at least one media file or several media files are selected meeting a predetermined requirement. The transcription comprised in the file identification data helps to improve the recognition rate of the speech recognition system, since the phonetic transcription which may be generated by a person skilled in the art better matches the recorded voice than does an automatically generated transcription of the file identification data.

Furthermore, a method may be provided for generating media file. The media files comprise media data and file identification date. The method comprises the following steps: First of all, a phonetic transcription of at least part of the file identification data is provided. This phonetic transcription is then added to the file identification data, so that the newly generated media file can be used in combination with a voice-controlled file selection system, where the media file is selected by using a voice command.

Preferably, different phonetic transcriptions are added to the file identification data and, therefore to the media file itself as described above.

### Brief description of the drawings

These and other potential objects, features and advantages of the invention will appear more fully from the following description of examples of embodiments of the invention. It is to be understood, however, that the scope of the present invention is not limited by any embodiment shown in the accompanying drawings, in which
Fig. 1 is a schematic view of a voice-controlled data system according to the invention,
Fig. 2 shows a flowchart showing different steps for a voice-controlled selection of a media file, and
Fig. 3 shows the composition of a media file comprising phonetic transcriptions.

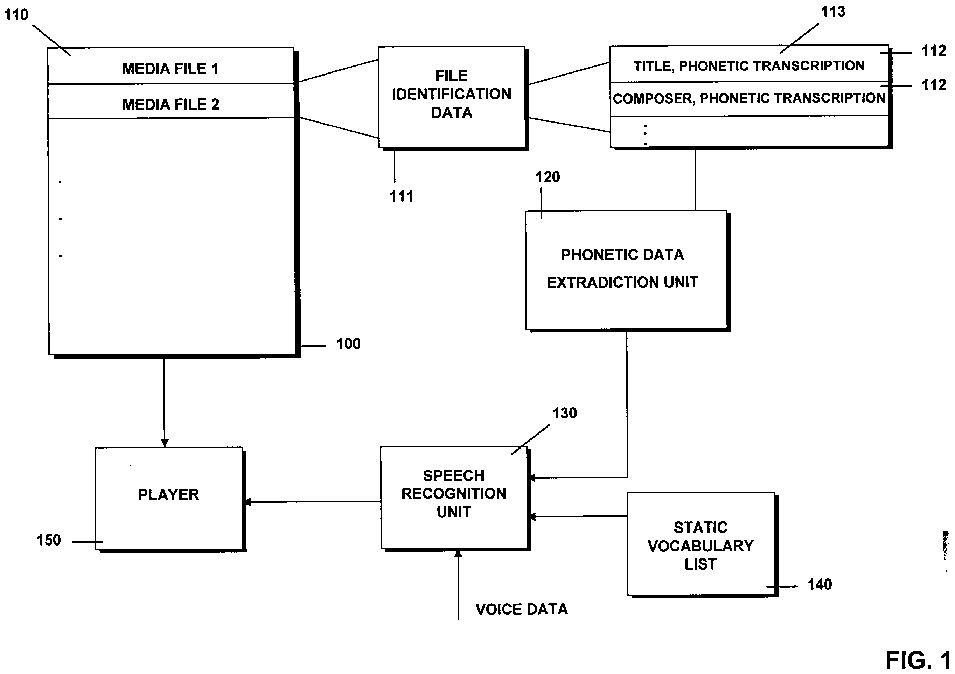

In Fig. 1 a voice-controlled data system is shown. The system comprises a data storage unit 100 which comprises different media files 110. The media file could comprise audio or video data and could be part of a compact disc or DVD, or any other storage unit, e.g., an SD card or any other medium capable of storing media files. The media file could be stored in a compressed way, be it the MP3 format, the AAC format, the MOV format, or the WMV format or any other storing format. The voice-controlled data system could be part of a multimedia system of a vehicle (not shown). The media file could be downloaded from an electronic music store, so that, to a high probability, the media files could be from different composers or artists. Additionally, the storage unit could comprise files of different genres, be it jazz, pop, or classic. However, it should be understood that the data storage unit could also be incorporated in a non-mobile environment.

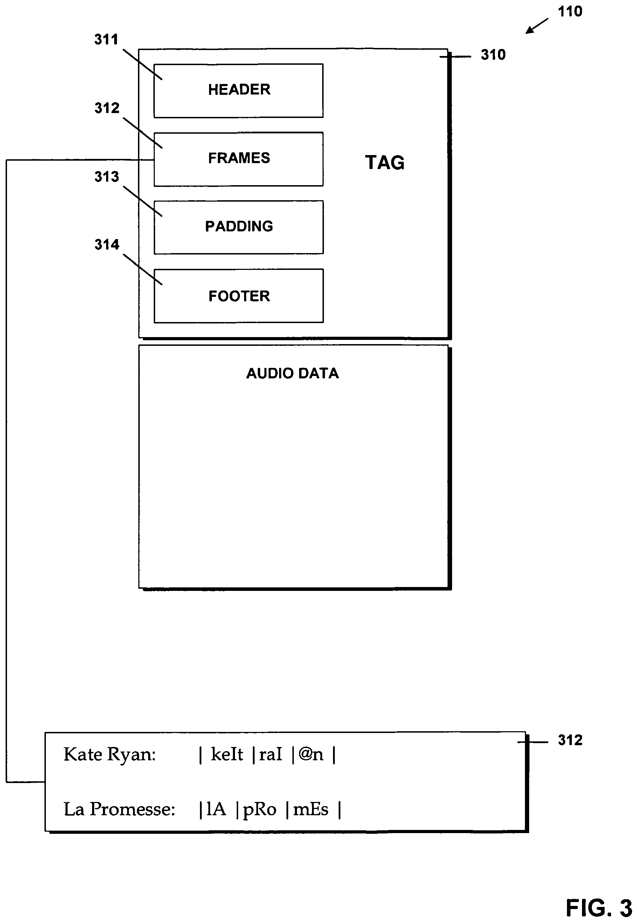

For the identification of the different media files, each media file 110 has a corresponding file identification data 111. The structure of the file identification data normally depends on the way the media files are stored on the data storage unit 100. Dependent on the data organization or data structure of the media file, the file identification data are either arranged at the end or at the beginning of the data. E.g., in the case of media file data in the MP3 format, the file identification data are part of a header of the data, as will be described in detail in connection with Fig. 3. Additionally, the file identification data could also be stored in a separate file and could be linked to the media file. The file identification data which help to recognize the media file comprise different data sets 112. The data sets could comprise any information relating to the file, e.g. the title of the file, the artist or composer, the genre of the file, the number of tracks, the number of beats per minute, etc. The file identification data additionally comprise phonetic transcriptions 113 of at least part of the different data sets. In the embodiment shown each data set 112 comprises phonetic transcription. In the embodiment shown the data set 112 may comprise the title of the media file and, additionally, the phonetic transcription of the title. Furthermore, the artist or composer and the respective transcription are mentioned. Preferably, for each piece of information comprised in the file identification data, which helps to identify the media file and which could be used by the user of the system to select the media file, phonetic transcriptions are provided.

If the user of the data storage system wants to select one of the media files comprised in the storage unit or several of the media files which he or she may use, commands such as "play [name of the title]", or "play [name of the composer]" are used. This voice command or voice data is input into a speech recognition unit 130 which creates a control command which is transmitted to a media file player 150. The player 150 selects one of the media files of the data storage unit 100 and will reproduce it.

The voice command of the user normally comprises static vocabulary, e.g. commands, e.g., play, stop, go to, forward, backwards, etc. In order to correctly identify this vocabulary, a static vocabulary list 140 can be provided which helps to identify the static vocabulary and which provides the corresponding phonetic transcriptions.

In addition to the static vocabulary, the voice command also comprises variable vocabulary depending on the content of the media file, e.g, the title of the media file or the composer of the media file. The speech recognition unit 130 has to recognize the static vocabulary and the variable vocabulary in order to generate the correct speech control command for the media player 150. To this end a phonetic data extraction unit 120 extracts the phonetic transcriptions comprised in the file identification data. The speech recognition unit 130 uses the information extracted from the phonetic data extraction unit 120 and the information of the static vocabulary list for comparing the input voice data to the phonetic data of the file identification data. Speech recognition units are known in the art. It should be understood that a two step speech recognition approach could be applied in the speech recognition unit, especially when the list of media files is large, the first step comprising the step of recognizing a phoneme sequence. The phoneme sequence is then compared to a possibly large list of phonetically transcribed items to determine a shorter candidate list of best matching items. In a second step, the candidate list is then supplied to a second part of the speech recognition unit, where the most likely entry in the list for the same speech input is determined by matching phonetic acoustic representations of the entries listed in the candidate list to the acoustic input of the voice command.

When the media files comprised in the storage unit 100 are used in an electronic multimedia system, the different phonetic transcriptions comprised in the file identification data could be collected when the system is booted. When the user inputs a voice command into the system, the collected phonetic transcriptions can be used for determining the exact meaning of the voice command.

It is also possible that the media file itself comprises different chapters as it is the case in video files or DVDs. In this case it is also possible to select different chapters of the media file.

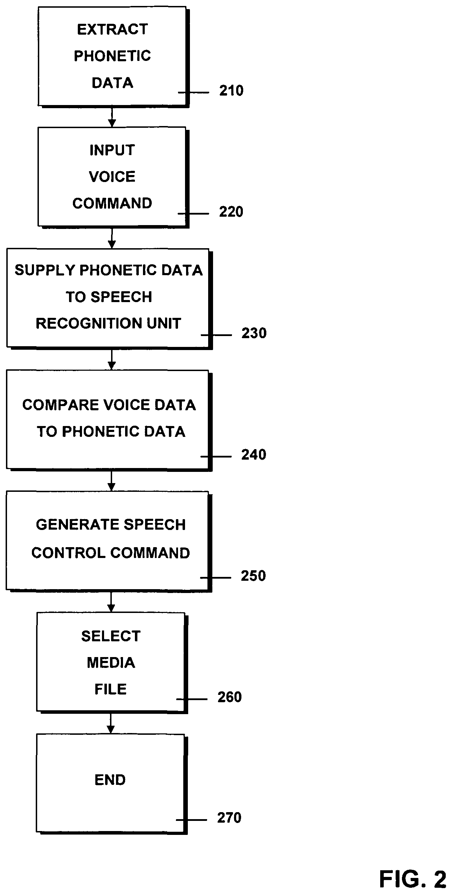

In Fig. 2 the different steps for a voice-controlled selection of a media file are shown. In a first step 210 all the phonetic transcriptions are extracted for the different media files comprised in the data storage unit 100. When the user wants to select one of the files or one of the chapters comprised in the files, a voice command is input in step 220. In order to determine the correct meaning of the voice command, the phonetic transcriptions are supplied to the speech recognition unit in step 230. The speech recognition unit compares the voice command to the phonetic data extracted from the phonetic data extraction unit 120 (step 240). During the comparison, the most likely speech control command is generated by matching the phonetic data to the phonetic acoustic representation of the voice command and by selecting the best matching item (step 250). In a next step, the media file or the media files meeting the selection of the user is/are selected in correspondence with the generated speech control command (step 260). In step 270 the process ends.

When different phonetic data or different phonetic transcriptions are comprised in the file identification data, all the different phonetic transcriptions will be extracted in step 210 and will be added to the list of phonetic annotations transmitted to the speech recognition unit 130.

In Fig. 3 the composition of a media file 110 is shown in more detail. In the embodiment shown, the media file is stored in the MP3 format. The meta-data are stored in an ID3v2 format. The MP3 format or MPEG layer 3 format is a data format which takes advantage of the fact that the human ears do not hear all the frequencies which are normally comprised in an audio or video file. In the embodiment shown, all the information relating to the media data comprised in the format are stored in a tagging part 310 of the media file 110. The tagging part 310 can contain any kind of information and data, e.g., the title, album, performer, website, lyrics, pictures, etc. In the shown block scheme the tag 310 comprises a header 311, frames 312 and, optionally, a padding 313 and a footer 314. In the frames 312 the different pieces of information which should be incorporated into the file, be it pictures or the file identification data, can be stored. In the bottom of Fig. 3 a part of a frame 312 is shown comprising phonetic transcriptions of the performer and the title of the file. In the embodiment shown, the media file comprises a song of Kate Ryan with the title "La Promesse". As can be seen, the phonetic transcriptions of the singer and of the title are comprised in the file identification data. In the embodiment shown the computer-readable phonetic language SAMPA is used. It should be understood that any other computer-readable phonetic alphabet could be used. In the embodiment shown, the name is an English pronounced name, whereas the title is a French pronounced term.

It should be understood that different phonetic transcriptions of the term "Kate Ryan" and of the term "La promesse" could be comprised in the file identification data. E.g., the system could comprise a phonetic transcription using phonetic rules of the French language of the name Kate Ryan. It could be possible that the user of the system thinks that the name is a French name, so that he or she could pronounce it "in a French way". Additionally, there could be provided phonetic transcriptions of the title of the song using German or English or Italian phonetic rules or phonetic rules of any other language. When the user with a mother language in German, Italian pronounces the title of the song as he or she is used to using German or English phonetic rules, the system is able to correctly identify the meaning of the speech control command when the phonetic transcriptions comprised in the file identification data are used.

In conclusion, the present invention helps to provide a voice-controlled data system in which the speech recognition is considerably improved by providing phonetic transcriptions of the file identification data.

## Claims

1. Voice-controlled data system comprising:
- a storage medium (100) for storing media files (110), the media files (110) comprising associated file identification data (111) for allowing the identification of the media files (110), wherein the file identification data are part of metadata where further information of the media file is stored, the file identification data (111) comprising phonetic data including phonetic information corresponding to the file identification data, wherein the file identification data comprise at least a first phonetic transcription of a title of the file and an artist of the file and a second phonetic transcription of the title of the file and the artist of the file, wherein the different phonetic transcriptions of the title and the artist are generated by applying pronunciation rules of different languages
- a static vocabulary list (140) comprising phonetic transcriptions of a static vocabulary of a voice command which is independent from the media file selected by the voice command,
- a phonetic data extraction unit configured to extract the first phonetic transcription and the second phonetic transcription from the file identification data,
- a media player for playing the media files
- a speech recognition unit (130) configured to receive the voice command from the user which comprises the static vocabulary and a variable vocabulary, the variable vocabulary depending on the content of the media file and include at least one of the artist and the title of the file, wherein the speech recognition unit is configured to generate a control command by comparing the voice command to the phonetic transcriptions of the static vocabulary and of the variable vocabulary including the first phonetic transcription and the second phonetic transcription, wherein the media player selects the media file based on the control command received from the speech recognition unit.

2. Data system according to claim 1, wherein the media files (110) comprise audio or video files.

3. Data system according to any of the preceding claims, wherein the media files (110) are stored on the storage medium (100) in a compressed way.

4. A method for a voice-controlled selection of a media file (110) stored on a data storage medium of a voice- controlled data system, the data system comprising the data storage unit (100) comprising a plurality of media files, the media files (110) comprising associated file identification data (111), wherein the file identification data are part of metadata where further information of the media file is stored, the file identification data comprising phonetic data which include phonetic information corresponding to the file identification data, wherein the file identification data comprise at least a first phonetic transcription of a title of the file and an artist of the file and a second phonetic transcription of the title of the file and the artist of the file, wherein the different phonetic transcriptions of the title and the artist are generated by applying pronunciation rules of different languages, the voice controlled data system furthermore comprising a static vocabulary list (140) comprising phonetic transcriptions of a static vocabulary used in a voice command by a user and which is independent from the media file selected by the voice command, a phonetic data extraction unit (120) configured to extract the first phonetic transcription and the second phonetic transcription from the file identification data, a media player (150) for playing the media files, and a speech recognition unit (130) the method comprising the following steps:
- receiving the voice command from the user for selecting one of the media files, the voice command comprising the static vocabulary and a variable vocabulary, the variable vocabulary depending on the content of the media file include at least one of the artist and the title of the file,
- supplying the voice command to the speech recognition unit,
- extracting the phonetic transcriptions including the first phonetic transcription and the second phonetic transcription from the file identification data,
- supplying the phonetic transcriptions to the speech recognition unit as recognition vocabulary,
- comparing, by the speech recognition unit (130) the voice command to the phonetic transcriptions of the static vocabulary and of the variable vocabulary including the first phonetic transcription and the second phonetic transcription, and generating a corresponding control command, and
- selecting a media file from the data storage unit in accordance with the generated control command.

## Patentansprüche

1. Sprachgesteuertes Datensystem, umfassend:
- ein Speichermedium (100) zum Speichern von Mediendateien (110), wobei die Mediendateien (110) verbundene Datei-Identifikationsdaten (111) umfassen, um die Identifikation der Mediendateien (110) zu ermöglichen, wobei die Datei-Identifikationsdaten Teil von Metadaten sind, in denen weitere Informationen der Mediendatei gespeichert sind, wobei die Datei-Identifikationsdaten (111) phonetische Daten einschließlich phonetischer Informationen umfassen, die den Datei-Identifikationsdaten entsprechen, wobei die Datei-Identifikationsdaten mindestens eine erste phonetische Transkription einer Bezeichnung der Datei und eines fachmännischen Verfassers der Datei und eine zweite phonetische Transkription der Bezeichnung der Datei und des fachmännischen Verfassers der Datei umfassen, wobei die unterschiedlichen phonetischen Transkriptionen der Bezeichnung der Datei und des fachmännischen Verfassers durch das Anwenden der Ausspracheregeln verschiedener Sprachen generiert werden,
- eine statische Vokabelliste (140), die phonetische Transkriptionen eines statischen Vokabulars eines Sprachbefehls umfasst, der unabhängig von der durch den Sprachbefehl ausgewählten Mediendatei ist,
- eine phonetische Datenextraktionseinheit, die so konfiguriert ist, dass sie die erste phonetische Transkription und die zweite phonetische Transkription aus den Datei-Identifikationsdaten extrahieren kann,
- einen Medienplayer zum Abspielen der Mediendateien,
- eine Spracherkennungseinheit (130), die so konfiguriert ist, dass sie den Sprachbefehl vom Nutzer empfangen kann, und die das statische Vokabular und ein
variables Vokabular umfasst, wobei das variable Vokabular von den Inhalten der Mediendatei abhängt und mindestens eines von dem fachmännischen Verfasser und der Bezeichnung der Datei umfasst, wobei die Spracherkennungseinheit so konfiguriert ist, dass sie einen Steuerbefehl durch das Vergleichen des Sprachbefehls mit den phonetischen Transkriptionen des statischen Vokabulars und des variablen Vokabulars, einschließlich der ersten phonetischen Transkription und der zweiten phonetischen Transkription, generieren kann, wobei der Medienplayer die Mediendatei auf der Basis des von der Spracherkennungseinheit empfangenen Steuerbefehls auswählt.

2. Datensystem nach Anspruch 1, wobei die Mediendateien (110) Audio- oder Videodateien umfassen.

3. Datensystem nach einem der vorgehenden Ansprüche, wobei die Mediendateien (110) komprimiert auf dem Speichermedium (100) gespeichert werden.

4. Verfahren für eine sprachgesteuerte Auswahl einer Mediendatei (110), die auf einem Datenspeichermedium eines sprachgesteuerten Datensystems gespeichert ist, wobei das Datensystem die Datenspeichereinheit (100) mit einer Vielzahl an Mediendateien umfasst, wobei die Mediendateien (110) verbundene Datei-Identifikationsdaten (111) umfassen, wobei die Datei-Identifikationsdaten Teil von Metadaten sind, in denen weitere Informationen der Mediendatei gespeichert sind, wobei die Datei-Identifikationsdaten phonetische Daten umfassen, die den Datei-Identifikationsdaten entsprechende phonetische Informationen umfassen, wobei die Datei-Identifikationsdaten mindestens eine erste phonetische Transkription einer Bezeichnung der Datei und eines fachmännischen Verfassers der Datei und eine zweite phonetische Transkription der Bezeichnung der Datei und des fachmännischen Verfassers der Datei umfassen, wobei die unterschiedlichen phonetischen Transkriptionen der Bezeichnung und des fachmännischen Verfassers durch das Anwenden der Ausspracheregeln verschiedener Sprachen generiert werden, wobei das sprachgesteuerte Datensystem ferner eine statische Vokabelliste (140) umfasst, umfassend phonetische Transkriptionen eines statischen Vokabulars, das bei einem Sprachbefehl durch einen Nutzer verwendet wird und unabhängig von der durch den Sprachbefehl ausgewählten Mediendatei ist, eine phonetische Datenextraktionseinheit (120), die so konfiguriert ist, dass sie die erste phonetische Transkription und die zweite phonetische Transkription aus den Datei-Identifikationsdaten extrahieren kann, einen Medienplayer (150) zum Abspielen der Mediendateien und eine Spracherkennungseinheit (130), wobei das Verfahren folgende Schritte umfasst:
- Erhalten des Sprachbefehls vom Nutzer für das Auswählen einer der Mediendateien, wobei der Sprachbefehl das statische Vokabular und ein variables Vokabular umfasst, wobei das variable Vokabular abhängig von den Inhalten der Mediendatei mindestens eines von dem fachmännischen Verfasser und der Bezeichnung der Datei umfasst,
- Zuführen des Sprachbefehls zur Spracherkennungseinheit,
- Extrahieren der phonetischen Transkriptionen, einschließlich der ersten phonetischen Transkription und der zweiten phonetischen Transkription, aus den Datei-Identifikationsdaten,
- Zuführen der phonetischen Transkriptionen als Erkennungsvokabular zur Spracherkennungseinheit,
- Vergleichen des Sprachbefehls mit den phonetischen Transkriptionen des statischen Vokabulars und des variablen Vokabulars, einschließlich der ersten phonetischen Transkription und der zweiten phonetischen Transkription, durch die Spracherkennungseinheit (130), und Generieren eines entsprechenden Steuerbefehls, und
- Auswählen einer Mediendatei aus der Datenspeichereinheit gemäß dem generierten Steuerbefehl.

## Revendications

1. Système de données à commande vocale comprenant :
- un support de stockage (100) destiné à stocker des fichiers multimédia (110), les fichiers multimédia (110) comprenant des données d'identification de fichier associées (111) permettant l'identification des fichiers multimédia (110), dans lequel les données d'identification de fichier font partie de métadonnées où des informations complémentaires du fichier multimédia sont stockées, les données d'identification de fichier (111) comprenant des données phonétiques comprenant des informations phonétiques correspondant aux données d'identification de fichier, dans lequel les données d'identification de fichier comprennent au moins une première transcription phonétique d'un titre du fichier et d'un artiste du fichier et une seconde transcription phonétique du titre du fichier et de l'artiste du fichier, dans lequel les différentes transcriptions phonétiques du titre et de l'artiste sont générées en appliquant des règles de prononciation de différentes langues
- une liste de vocabulaire statique (140) comprenant des transcriptions phonétiques d'un vocabulaire statique d'une commande vocale qui est indépendante du fichier multimédia sélectionné par la commande vocale,
- une unité d'extraction de données phonétiques conçue pour extraire la première transcription phonétique et la seconde transcription phonétique des données d'identification de fichier,
- un lecteur multimédia permettant de lire les fichiers multimédia
- une unité de reconnaissance de la parole (130) conçue pour recevoir la commande vocale provenant de l'utilisateur qui comprend le vocabulaire statique et un vocabulaire variable, le vocabulaire variable dépendant du contenu du fichier multimédia et comprenant au moins l'un parmi l'artiste et le titre du fichier, dans lequel l'unité de reconnaissance de la parole est conçue pour générer une commande de contrôle en comparant la commande vocale aux transcriptions phonétiques du vocabulaire statique et du vocabulaire variable comprenant la première transcription phonétique et la seconde transcription phonétique, dans lequel le lecteur multimédia sélectionne le fichier multimédia sur la base de la commande de contrôle reçue depuis l'unité de reconnaissance de la parole.

2. Système de données selon la revendication 1, dans lequel les fichiers multimédia (110) comprennent des fichiers audio ou vidéo.

3. Système de données selon l'une quelconque des revendications précédentes, dans lequel les fichiers multimédia (110) sont stockés sur le support de stockage (100) d'une manière compressée.

4. Procédé d'une sélection à commande vocale d'un fichier multimédia (110) stocké sur un dispositif de stockage de données d'un système de données à commande vocale, le système de données comprenant l'unité de stockage de données (100) comprenant une pluralité de fichiers multimédia, les fichiers multimédia (110) comprenant des données d'identification de fichier associées (111), dans lequel les données d'identification de fichier font partie de métadonnées où des informations complémentaires du fichier multimédia sont stockées, les données d'identification de fichier comprenant des données phonétiques qui comprennent des informations phonétiques correspondant aux données d'identification de fichier, dans lequel les données d'identification de fichier comprennent au moins une première transcription phonétique d'un titre du fichier et d'un artiste du fichier et une seconde transcription phonétique du titre du fichier et de l'artiste du fichier, dans lequel les différentes transcriptions phonétiques du titre et de l'artiste sont générées en appliquant des règles de prononciation de différentes langues, le système de données à commande vocale comprenant en outre une liste de vocabulaire statique (140) comprenant des transcriptions phonétiques d'un vocabulaire statique utilisé dans une commande vocale par un utilisateur et qui est indépendante du fichier multimédia sélectionné par la commande vocale, une unité d'extraction de données phonétiques (120) conçue pour extraire la première transcription phonétique et la seconde transcription phonétique des données d'identification de fichier, un lecteur multimédia (150) permettant de lire les fichiers multimédia et une unité de reconnaissance de la parole (130), le procédé comprenant les étapes suivantes :
- la réception de la commande vocale provenant de l'utilisateur pour sélectionner l'un parmi les fichiers multimédia, la commande vocale comprenant le vocabulaire statique et un vocabulaire variable, le vocabulaire variable dépendant du contenu du fichier multimédia comprend au moins l'un parmi l'artiste et le titre du fichier,
- la fourniture de la commande vocale à l'unité de reconnaissance de la parole,
- l'extraction des transcriptions phonétiques comprenant la première transcription phonétique et la seconde transcription phonétique des données d'identification de fichier,
- la fourniture des transcriptions phonétiques à l'unité de reconnaissance de la parole en tant que vocabulaire de reconnaissance,
- la comparaison, par l'unité de reconnaissance de la parole (130), de la commande vocale aux transcriptions phonétiques du vocabulaire statique et du vocabulaire variable comprenant la première transcription phonétique et la seconde transcription phonétique, et la génération d'une commande de contrôle correspondante, et
- la sélection d'un fichier multimédia à partir de l'unité de stockage de données selon la commande de contrôle générée.
